# EUROPEAN PATENT APPLICATION

(11) **EP 1 288 076 A1**
(43) Date of publication of application: **05.03.2003**
(21) Application number: 01830563.1
(22) Date of filing: 03.09.2001
(51) Int. Cl.: B60R 13/00

(54) **Emblem support**

(71) Applicant: Lupini Targhe S.r.l., 24040 Pognano (Bergamo) (IT)
(72) Inventor: Zaniboni, Giovanni, 24040 Pognano (IT)
(74) Representative: Long, Giorgio

(57) **Abstract**

The present invention relates to an emblem support (10) positioned on a housing for an air bag of a motor vehicle, comprising an emblem support plate (2) and means (22, 1) of fixing to the cover (L) of an air bag housing, the said emblem support (10) being characterized in that the said fixing means (22, 1) comprise a pin (22) and an element (1) for fixing the said pin (22) to the said cover (L), the said fixing element (1) comprising means (12) of attaching the said fixing element (1) to the said pin (22) and cover means (11) of the said attachment means (12) facing towards the air bag.

## Description

The present invention relates to an emblem support positioned on an air bag housing.

More particularly, the present invention relates to a support for an emblem positioned on the cover of an air bag housing which is designed to open to allow the air bag to emerge.

There is a known way of applying to the centre of the steering wheel of a vehicle an emblem, showing a logo, a coat of arms or a trade mark relating, for example, to the type of vehicle.

The emblem generally consists of a disc formed by shearing from an aluminium sheet. The said disc is applied, after being subjected to a printing process to reproduce the desired logo, coat of arms or trade mark on its visible surface, to an emblem support plate fixed to the centre of the visible surface of the steering wheel.

Typically, the emblem is applied to the plate by gluing, press fitting or clamping.

For the safety of the driver and passengers, this emblem support plate must remain firmly fixed to the steering wheel while the vehicle is in use.

This is even more necessary in vehicles provided with safety devices of the air cushion type, known as air bags, in which the emblem support plate is applied on the cover of the housing which contains the air bag and is designed to open suddenly to allow the air bag to emerge.

The sudden opening of this cover can cause parts connected or applied to it, such as the emblem and the emblem support plate, to be detached, resulting in injury to the driver and/or passengers.

The applicant has also observed that, in vehicles having air bag housings in which the cover of the housing has an emblem support plate system, the inflation of the air bag could be impeded by damage due to its contact with the part of the emblem support plate facing the bag of the air bag device.

The problem with which the present invention is concerned is therefore that of avoiding the aforesaid drawbacks.

The problems described above are overcome by an emblem support as outlined in the attached product claims.

Further characteristics and advantages of the emblem support according to the present invention will be made clearer by the description of some preferred embodiments, provided below for guidance and without restrictive intent, with reference to the following figures, in which:
Figure 1 is an exploded front view of the emblem support according to one embodiment of the present invention,
Figure 2 is an exploded rear view of the emblem support of Figure 1,
Figure 3 is a perspective view of the fixing element of the emblem support according to the present invention,
Figure 4 shows the emblem support according to the present invention in the assembled state,
Figure 5 is an enlarged sectional view from the side of a detail of the emblem support according to a variant embodiment of the invention.

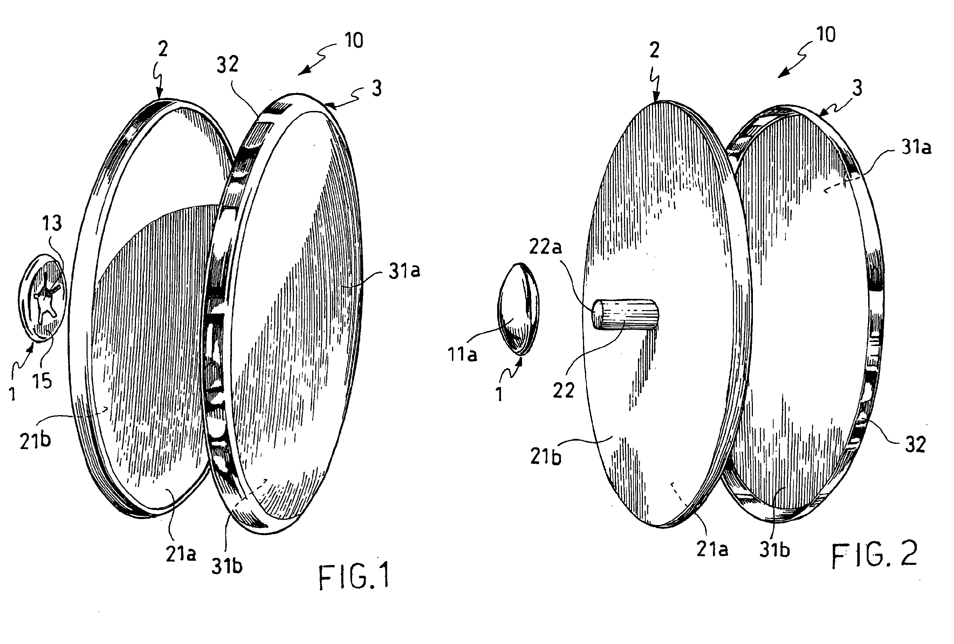

As shown in Figures 1 and 2, the emblem support 10 according to the present invention comprises a fixing element 1, an emblem support plate 2 and an emblem 3.

The emblem 3 consists of a disc having a rear surface 31a designed to come into contact with the front surface 21a of the emblem support plate 2 and a front surface 31b treated by a printing or other process for reproducing an identifying symbol such as, for example, a logo, coat of arms or trade mark, on this surface.

The said emblem 3 comprises a bent edge 32 which can be turned over and cover the perimetric profile of the emblem support plate 2. In the example in Figures 1 and 2, the bent edge 32 extends along the whole perimeter of the emblem 3, forming a complete perimetric edge. The said emblem 3 can be formed by shearing and bending from a sheet of metallic material such as, for example, aluminium, which has been printed previously.

In the example in Figures 1 and 2, the emblem 3 is fixed to the front surface 21a of the emblem support plate 2 by gluing.

This fixing can also be carried out by other known fixing processes, such as clamping, carried out by means of wings formed in one piece along the perimetric edge of the emblem 3.

Advantageously, the said emblem support plate 2 is an element of plastic material, produced in an economical way by moulding. The emblem 3 and the emblem support plate 2 can also be made in one piece.

In this case, the said one piece is preferably made from metallic material such as, for example, aluminium.

The emblem support plate 2 is provided with a pin 22 positioned essentially in the centre of its rear surface 21b, in other words the surface opposite the front surface 21a of the emblem support plate 2 which comes into contact with the rear surface 31b of the emblem 3.

The said pin 22 is made in one piece with the emblem support plate 2 and is in the shape of a cylinder, preferably a solid cylinder.

The base 22a of the said pin 22 has a diameter greater than that of the hole 13 in the fixing element 1, so that the pin 22 is retained permanently in the hole 13.

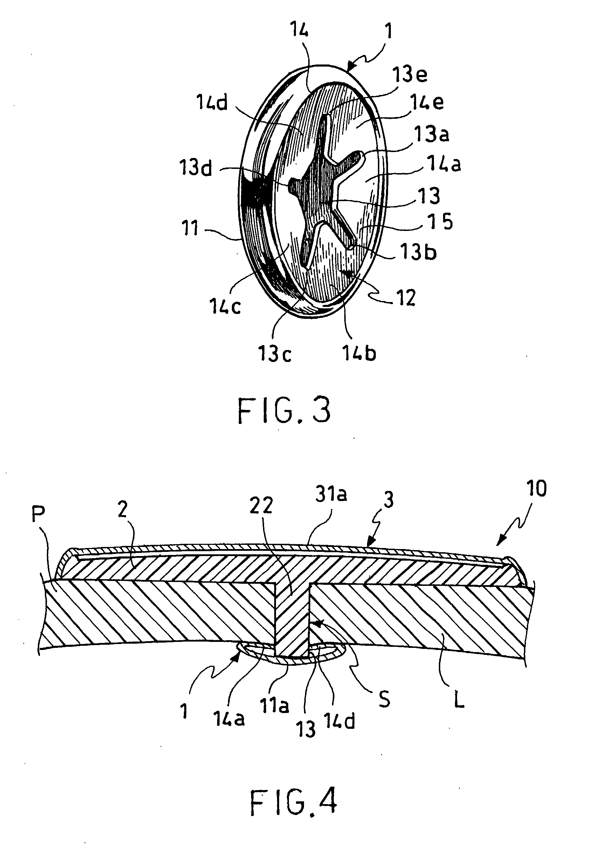

As shown in Figure 3, the fixing element 1 comprises means 12 of attaching the said fixing element 1 to the said pin 22, and means 11 of covering the said attachment means 12 which face the air bag.

The said attachment means 12 consist of an external surface 15, preferably of convex shape, having in an essentially central position a hole 13 surrounded by notches 13a, 13b, 13c, 13d and 13e which form flaps 14a, 14b, 14c, 14d and 14e.

Advantageously, the said cover means 11 have an outer surface 11a free of sharp edges facing the air bag.

Preferably, the said cover means 11 have an outer surface 11a of concave shape.

The notches 13a, 13b, 13c, 13d and 13e present in the attachment means 12 extend radially along the external surface 15 from the said hole 13, without intersecting the perimetric edge 14 which delimits the said attachment means 12 from the said cover means 11.

When the said pin 22 is press-fitted into the said hole 13, the flaps 14a, 14b, 14c, 14d and 14e are bent inwards towards the cover means 11, to retain the said pin 22 permanently in the hole 13.

The preferred material for the fixing element 1 is aluminium.

In the embodiment shown in Figure 3, the fixing element 1 is made from aluminium and has five notches 13a, 13b, 13c, 13d and 13e, which form five flaps 14a, 14b, 14c, 14d and 14e which can bend inwards towards the cover means 11.

As shown in Figure 3, the fixing element 1 and the cover means 11 are made in two pieces.

However, they can also be made in one piece.

The said fixing element 1 is formed by conventional pressing methods.

As shown in Figure 4, the cover L of the air bag housing is provided with a seat S for the assembly of the emblem support 10 according to the present invention.

In detail, the fitting of the emblem support 10 to the cover L of the air bag housing according to the present invention comprises the following steps:
a) positioning the pin 22 within the seat S of the cover L;
b) positioning the fixing element 1 inside the cover L in such a way that the hole 13 is located in a centred position with respect to the pin 22, and
c) press-fitting the said pin 22 into the said hole 13 by bending the flaps 14a, 14b, 14c, 14d and 14e inwards towards the cover means 11.

Preferably, the said press-fitting of the pin 22 into the hole 13 is carried out by exerting a pressure on the outer surface 11a, which faces the air bag, of the cover means 11.

The above description clearly shows the advantages of the emblem support positioned on the cover of an air bag housing according to the present invention.

A first advantage is that the emblem support according to the present invention comprises means of covering the attachment means provided with an outer surface, facing the air bag, which is free of sharp points. This allows the air bag to emerge without risk of damage to it.

A second advantage is that the emblem support according to the present invention comprises attachment means which enable an emblem to be applied with complete safety to the cover of a housing for an air bag device, avoiding any possible risk of detachment of the emblem at the moment of activation of the device.

A third advantage is that the emblem support according to the present invention is fitted in a simple way to the cover of a housing for an air bag device.

A fourth advantage is that the emblem support according to the present invention is made from light and inexpensive materials.

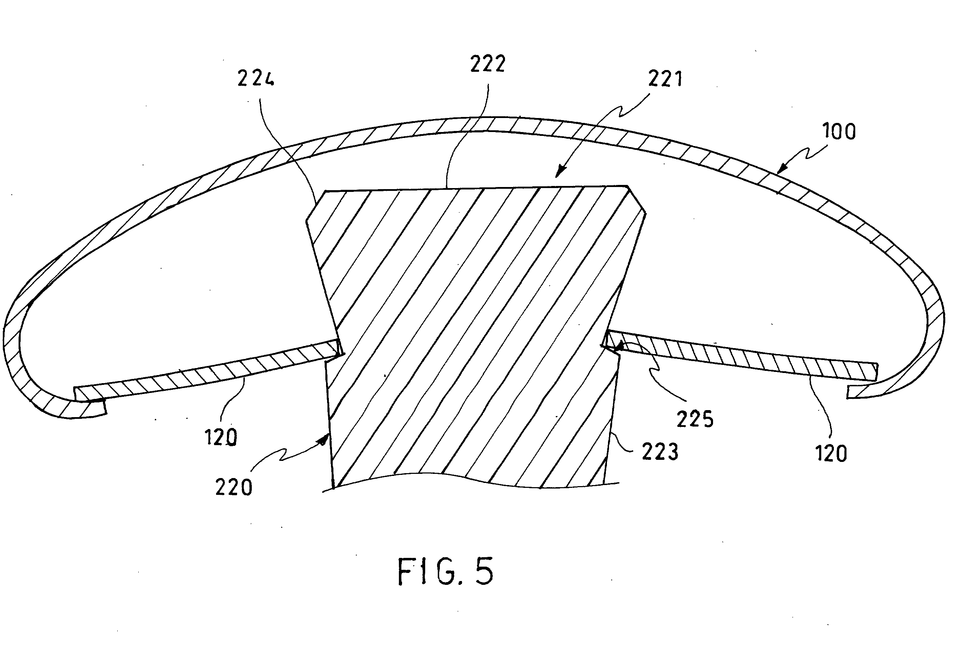

According to a variant embodiment of the present invention, in Figure 5 the fixing element 100 is completely identical to that described previously, and will therefore not be described in detail here.

The number 220 indicates the pin of the emblem support plate (not shown).

In particular, the said pin 220 has an end 221 essentially shaped in the form of an inverted truncated cone, in other words with its larger base 222 free, and an essentially cylindrical body 223.

The free edge 224 of the end 221 is preferably rounded to create a circular ring.

The said free edge can alternatively be formed, for example, as a sharp edge.

Additionally, the end 221 is joined to the body 223 of the pin 220 in such a way as to form a circular shoulder 225 facing towards the said end 221.

The advantage provided by this variant embodiment of the present invention lies in the fact that, during the fitting of the emblem support, the end 221 is forced into the fixing element 100 until the shoulder 225 comes to bear on the free end of the attachment means 120 of the fixing element 100.

Clearly, the insertion of the pin 220 of the emblem support plate into the said fixing element 100 can thus be more easily carried out and checked, since the aforesaid stop forms a kind of limit device for the movement of the pin.

Additionally, the inverted truncated conical shape of the end 221 of the said pin 220 increases the resistance to any withdrawal of the pin 220 from the fixing element 100.

Clearly, the above description relates only to certain embodiments of the emblem support according to the present invention, to which a person skilled in the art will be able to make any necessary modifications to adapt it to particular applications, without departure from the scope of protection of the present invention.

For example, the notches 13a, 13b, 13c, 13d and 13e can be replaced by corresponding weakening lines which delimit flaps for securing the pin permanently inside the fixing element.

The number of notches or weakening lines can be varied as desired provided that the number of flaps delimited by them is sufficient to retain the pin permanently inside the hole.

## Claims

1. An emblem support (10) comprising an emblem support plate (2) and means (22, 1; 220, 100) for fixing to the cover (L) of an air bag housing, the said emblem support (10) being **characterized in that** the said fixing means (22, 1; 220, 100) comprise a pin (22; 220) and an element (1; 100) for fixing the said pin (22; 220) to the said cover (L), the said fixing element (1; 100) comprising means (12; 120) of attaching the said fixing element (1; 100) to the said pin (22; 220) and cover means (11) of the said attachment means (12; 120) facing towards the air bag.

2. An emblem support (10) according to Claim 1, in which the said cover means (11) of the said attachment means (12) have an outer surface (11a) free of sharp edges.

3. An emblem support (10) according to Claim 1 or 2, in which the said attachment means (12; 120) and the said cover means (11) are made in one piece.

4. An emblem support (10) according to Claim 1 or 2, in which the said attachment means (12; 120) and the said cover means (11) are made in two pieces.

5. An emblem support (10) according to any one of Claims 1 to 4, in which an emblem (3) is fixed on the front surface (21a) of the said emblem support plate (2) by gluing.

6. An emblem support (10) according to any one of Claims 1 to 4, in which an emblem (3) is fixed on the front surface (21a) of the said emblem support plate (2) by clamping by means of wings formed in one piece along the perimetric edge of the said emblem (3).

7. An emblem support (10) according to any one of Claims 1 to 4, in which the said emblem support plate (2) is made in one piece with an emblem (3).

8. An emblem support (10) according to any one of Claims 1 to 7, in which the said attachment means (12; 120) comprise an external surface (15) having a hole (13) surrounded by notches (13a, 13b, 13c, 13d and 13e) which delimit flaps (14a, 14b, 14c, 14d and 14e).

9. An emblem support (10) according to Claim 8, in which the said flaps (14a, 14b, 14c, 14d and 14e) retain the said pin (22; 220) permanently in the hole (13) as a result of the bending of the said flaps (14a, 14b, 14c, 14d and 14e) inwards towards the cover means (11) when the said pin (22; 220) is press-fitted into the said hole (13).

10. An emblem support (10) according to any one of Claims 1 to 9, in which the said pin (22; 220) is cylindrical in shape.

11. An emblem support (10) according to Claim 10, in which the said pin (22; 220) has a base (22a; 222) whose diameter is greater than that of the hole (13).

12. An emblem support (10) according to any one of Claims 1 to 11, in which the said notches (13a, 13b, 13c, 13d and 13e) extend radially along the external surface (15) of the said attachment means (12; 120) from the said hole (13) without intersecting the perimetric edge (14) which delimits the said attachment means (12) from the said cover means (11).

13. An emblem support (10) according to any one of Claims 1 to 12, in which the pin (220) comprises an end (221) in the shape of an inverted truncated cone and an essentially cylindrical body (223).

14. An emblem support (10) according to Claim 13, in which the said end (221) is joined to the said body (223) by a shoulder (225) facing towards the said end (221).

15. An emblem support (10) according to Claim 13 or 14, in which the said end (221) comprises a circular free edge (224) which is rounded to form a circular ring.

16. An emblem support (10) according to any one of Claims 1 to 15, in which the said fixing element (1) is made from aluminium.

17. A cover of an air bag housing, provided with a seat (S) for receiving the emblem support (10) described in Claims 1 to 16.
